(19) Europäisches Patentamt
European Patent Office
Office européen des brevets

(11) EP 2 265 651 B1

(12) EUROPÄISCHE PATENTSCHRIFT

(45) Veröffentlichungstag und Bekanntmachung des Hinweises auf die Patenterteilung:
07.12.2016 Patentblatt 2016/49

(51) Int Cl.:
C08F 220/14 (2006.01)      C08F 2/44 (2006.01)
C08K 9/06 (2006.01)

(21) Anmeldenummer: 09732308.3

(22) Anmeldetag: 20.04.2009

(86) Internationale Anmeldenummer:
PCT/EP2009/002856

(87) Internationale Veröffentlichungsnummer:
WO 2009/127435 (22.10.2009 Gazette 2009/43)

(54) **POLYMERISIERBARE MASSE MIT VERNETZENDEN NANOPARTIKELN**

POLYMERISABLE SUBSTANCE WITH CONNECTED NANOPARTICLES

MASSE POLYMÉRISABLE DOTÉE DE NANOPARTICULES EN RÉSEAU

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: 18.04.2008 EP 08007580

(43) Veröffentlichungstag der Anmeldung:
29.12.2010 Patentblatt 2010/52

(73) Patentinhaber: Evonik Hanse GmbH
21502 Geesthacht (DE)

(72) Erfinder:
• LANGERBEINS, Klaus
21502 Geesthacht (DE)
• KÜHNER, Uwe Dietrich
20457 Hamburg (DE)
• SIOL, Werner
64297 Darmstadt (DE)

(74) Vertreter: Glawe, Delfs, Moll
Partnerschaft mbB
von Patent- und Rechtsanwälten
Postfach 13 03 91
20103 Hamburg (DE)

(56) Entgegenhaltungen:
EP-A- 0 505 230      WO-A-00/73393
WO-A-98/59388

**Beschreibung**

Die Erfindung betrifft eine polymerisierbare Masse auf der Basis von Acrylaten und/oder Methacrylaten sowie unter Verwendung einer solchen Masse hergestellte polymere Werkstoffe. Diese Werkstoffe zeichnen sich durch gute mechanische und optische Eigenschaften bei Raumtemperatur und Umformbarkeit bei erhöhter Temperatur aus.

Polyacrylate und -methacrylate sind im Stand der Technik seit langem bekannt. Sie werden beispielsweise für die Herstellung von Plexiglas oder sogenannten Acrylatkautschuken verwendet. Die guten Eigenschaften dieser Materialien lassen sich durch ein Recken bei Temperaturen oberhalb der Glastemperatur weiter verbessern (DE 4443355).

Die mechanischen Eigenschaften von Polymeren lassen sich durch Füllstoffe verbessern. Aufgrund der verhältnismäßig leichten Verseifbarkeit von Acrylatestergruppen können bei Polyacrylaten nur wenige Füllstoffe Verwendung finden, beispielsweise Ruß. Dieser beeinträchtigt jedoch die häufig gewünschte Transparenz von Polyacrylaten.

Für verschiedene Anwendungen kommen mit anorganischen Nanopartikeln modifizierte Acrylat- und Methacrylatnetzwerke zum Einsatz, hier sind insbesondere Kratzfestbeschichtungen (DE 698 26 226) oder Dentalmaterialien zu nennen (DE 196 17 931). Netzwerke auf der Basis von methacryloxypropylgepfropften $SiO_2$- Nanopartikeln und Methylmethacrylat werden von Mauger et al. beschrieben (Polym Int 53: 378(2004)). DE 199 33 098 offenbart mit Nanopartikeln modifizierte Bindemittel, die durch Umsetzung von Nanopartikeln mit epoxyfunktionellen Bindemitteln hergestellt werden. Durch diese Umsetzung soll eine besonders gute Verteilung der Nanopartikel in der Matrix erreicht werden.

EP0505230 betrifft durchsichtige Besichtungen auf der Basis wässriger Latexdispersionen, die feinteiligen Füllstoffe enthalten und die verbesserten mechanischen Eigenschaften zeigen. Die feinteiligen Füllstoffe, modifizierte SiO2-Partikel werden in wässriger Lösung dispergiert. Das polymerisierbare Monomer wird dazu getropft und langsam polymerisiert.

Der genannte Stand der Technik ist auf eine Erhöhung der Härte, der Kratzfestigkeit oder der Korrosionsbeständigkeit fokussiert. Viele Kunststoffanwendungen setzen jedoch eine Verformbarkeit voraus, z.B. in einer Anwendung als Verglasungsmaterial, beispielsweise als Tunnelgewölbe.

Der Erfindung liegt die Aufgabe zugrunde, eine polymerisierbare Masse der eingangs genannten Art zu schaffen, die vielseitig verwendbar ist und den aus solchen polymerisierbaren Massen herstellbaren Werkstoffen gute mechanische Eigenschaften verleiht. Bei Temperaturen oberhalb der Glasübergangstemperatur Tg des Werkstoffes soll vorzugsweise eine gewisse Dehnbarkeit vorhanden sein, die eine Umformung erlaubt.

Gegenstand der Erfindung ist eine polymerisierbare Masse, die enthält:

a) Acrylate und/oder Methacrylate,

b) 0,1 bis 70 Gew.-% $SiO_2$-Partikel mit einer mittleren Teilchengröße von 1 bis 30 nm, die polymerisierbare Gruppen vom Typ Methacryloyl-, Acryloyl, Styryl-, Itaconyl-, Crotonyl-, Vinyl-, Allyl- und Alkenyl- auf der Oberfläche aufweisen und in den Acrylaten und/oder Methacrylaten dispergiert vorliegen, wobei die $SiO_2$-Partikel zu wenigstens 50% aus vereinzelten, nicht aggregierten oder agglomerierten Primärpartikeln bestehen,

c) maximal 2 Gew.-% Vernetzermoleküle.

Die erfindungsgemäße polymerisierbare Masse basiert auf Acrylaten und/oder vorzugsweise auf Methacrylaten. Als Füllstoff enthält sie nanoskalige $SiO_2$ Partikel, die auf ihrer Oberfläche polymerisierbare Gruppen aufweisen. Solche polymerisierbaren Gruppen können beispielsweise durch eine geeignete Silanisierung oder eine andere unten beschriebene Modifikation chemisch an die Oberfläche der $SiO_2$ Partikel angebunden werden.

Die Herstellung silanisierter $SiO_2$ Nanopartikel mit polymerisierbaren Gruppen an der Oberfläche ist im Stand der Technik grundsätzlich bereits bekannt. Bspw. können $SiO_2$ Partikel aus Kieselsolen ausgefällt und anschließend mit Organosilanen wie bspw. Vinylsilanen silanisiert werden. Eine solche Herstellung über Fällungskieselsäuren ist bspw. in EP 0 926 170 B1 beschrieben.

Eine andere Möglichkeit ist bspw. beschrieben in J. Colloid Interface Sei 26:62 (1968). Es handelt sich hier um die sogenannte Stöber-Synthese solcher Nanopartikel.

Als Quelle für die unmodifizierten $SiO_2$-Partikel kommen Dispersionen von kolloidalem Siliciumdioxid in Wasser oder Lösungsmitteln in Frage. Dabei ist es unerheblich, ob dieses durch die Hydrolyse von Alkoxysilanen oder nach anderen Verfahren gewonnen wird. Insbesondere eignen sich Partikel, wie sie bei der Kondensation von angesäuertem Wasserglas entstehen. Zahlreiche Verfahren dazu sind in der Literatur beschrieben und eine Reihe von Produkten auf dem kommerziellen Markt erhältlich. Dazu zählen z.B. Bindzil 40/130 und Bindzil 40/220 (Eka Chemicals), Levasil 200/40% (H.C. Starck) oder auch Nalco 2327 und Nalco 2329 (Nalco Company). Beispiele für kommerzielle Lösungsmittelsole sind IPA-ST und MIBK-ST der Firma Nissan Chemical American Corporation.

Die Siliciumdioxidpartikel weisen bevorzugt eine Oberflächenmodifikation zur Funktionalisierung und ggf. zur Kompatibilisierung mit den Monomeren auf. Bekannte und der Fachwelt geläufige Methoden zur Oberflächenfunktionalisierung sind beispielsweise die Silanisierung der Oberfläche, die Alkoholyse, die Verwendung saurer, basischer oder ionischer Verbindungen, die mit der polaren Oberfläche ionische Bindungen eingehen, die radikalische Anbindung von Polymeren und Monomeren, sowie die lediglich physikalische Anhaftung von hydrophoben Polymeren.

Die Silanisierung der Oberfläche der $SiO_2$-Teilchen geschieht bevorzugt mit Organosilanen oder Organosiloxanen. Diese Silanisierung ist eine in der Fachwelt geläufige Technologie.

Die Organosilane oder Organosiloxane sind bevorzugt ausgewählt aus der Gruppe der bestehend aus Organosilanen der Formel $R^1_a SiX_{4-a}$, Organosilanen der Formel $(R^1_3Si)_b NR^1_{3-b}$ und Organosiloxanen der Formel $R^1_n SiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen oder ein Wasserstoffatom ist, jedes X unabhängig voneinander auswählt eine hydrolysierbare Gruppe ist, a = 0, 1, 2 oder 3, b = 1, 2 oder 3 und n eine Zahl von 2 bis einschließlich 3 ist. Beispiele für hydrolysierbare Gruppen sind Halogen-, Alkoxy-, Alkenoxy-, Acyloxy-, Oximino- und Aminoxygruppen. Bei den organofunktionellen Kohlenwasserstoffresten sind insbesondere ungesättigte Reste bevorzugt, die reaktiv in einer radikalischen Polymerisation sind. Beispiel für solche organischen Reste sind solche die Methacryloyl, Acryloyl-, Styryl-, Vinyl-, Hexenyl- und Allyl-Funktionalitäten bzw. Gruppen aufweisen.

Zur Funktionalisierung der Partikel mit reaktiven Gruppen kommen beispielsweise Vinyltrimethoxysilan, Vinyltriethoxysilan, Methylvinyldimethoxysilan, Methylvinyldiethoxysilan, Vinyldimethylmethoxysilan, Vinyldimethylethoxysilan, Divinyldimethoxysilan, Divinyldiethoxysilan, Vinyltriacetoxysilan, Vinyltrichlorsilan, Methylvinyldichlorsilan, Dimethylvinylchlorsilan, Divinyldichlorsilan, Vinyltris(2-methoxyethoxy)silan, Hexenyltrimethoxysilan, Gamma-Methacryloxypropyltrimethoxysilan, Gamma-Methacryloxypropyltriethoxysilan, Gamma-Methacryloxypropyltriacetoxysilan, Methacryloxymethyltrimethoxysilan, Methacryloxymethyltriethoxysilan, (Methacryloxymethyl)methyldimethoxysilan, (Methacryloxymethyl)-methyldiethoxysilan, Acryloxypropyltrimethoxysilan, Acryloxypropyltriethoxysilan, Gamma-Methacryloxypropyltrichlorsilan, Gamma-Methacryloxypropyldimethylchlorsilan, Vinylbenzylethylendiaminpropyltrimethoxysilan, Vinylbenzylethylendiaminpropyltrimethoxysilan-Hydrochlorid, Allylethylendiaminepropyltrimethoxysilan, Allylethylendiaminpropyltriethoxysilan, Allyltrichlorsilan, Allylmethyldichlorsilan, Allyldimethylchlorsilan, Allyltrimethoxysilan, Allyltriethoxysilan, Allylmethyldimethoxysilan, Allylmethyldiethoxysilan, Allyldimethylmethoxysilan, Allyldimethylethoxysilan, Divinyltetramethyldisilazan, Divinyltetramethyldisiloxan, Trimethyltrivinylcyclotrisiloxan, Tetramethyltetravinylcyclotetrasiloxan, Pentamethylpentavinylcyclopentasiloxan und Hexamethylhexavinylcyclohexasiloxan in Frage. Es können Mischungen dieser Silane untereinander oder mit unfunktionalisierten Silanen wie z.B. Chlortrimethylsilan oder Octyltrimethoxysilan eingesetzt werden. Die Silanisierung kann auch in mehreren Schritten und unterschiedlichen Lösungsmitteln durchgeführt werden.

Bei einer alternativen Methode zur Oberflächenmodifizierung können die $SiO_2$-Partikel mit Alkoholen, Polyolen oder Mischungen daraus behandelt werden. Durch die Behandlung binden Silanolgruppen auf der Oberfläche des $SiO_2$-Partikels chemisch mit den Hydroxygruppen des Alkohols, so dass an der Oberfläche gebundene Estergruppen entstehen. Diese Technik ist beschrieben bspw. in US-A-2801185. Im Sinne dieser Erfindung ist es bevorzugt, zumindest teilweise ungesättigte primäre Alkohole einzusetzen. Beispiele für solche Alkohole sind Hydroxyethylacrylat, Hydroxyethylmethacrylat, und Allylalkohol.

Eine weitere Methode zur Funktionalisierung ist das Modifizieren der Oberfläche mit Ankergruppen, z.B. funktionalisierten Silanen. Diese Silane verfügen über eine reaktive Gruppe, die in einem zweiten Schritt mit einem Molekül reagieren kann, das selbst über zwei reaktive Gruppen verfügt. Die eine Gruppe reagiert mit dem Silan, die andere ist in der radikalischen Polymerisation reaktiv.

Ebenfalls verwendbar ist ein Halogensilan, beispielsweise ein Chlorsilan. Die Silane können funktionalisiert sein, beispielsweise mit polymerisierbaren Gruppen, insbesondere Vinylgruppen. Im Rahmen der Erfindung ist es möglich, nacheinander zwei Silanisierungsschritte mit unterschiedlichen Silanen durchzuführen. Beispielsweise kann lediglich in einem der beiden Silanisierungsschritte ein funktionalisiertes Silan, bevorzugt ein Vinylsilan, eingesetzt werden. Ebenfalls ist es möglich, Mischungen funktionalisierter und nicht funktionalisierter Silane in einem Silanisierungsschritt einzusetzen.

Die Erfindung hat erkannt, dass diese oberflächenmodifizierten $SiO_2$ Partikel überraschender Weise bei der radikalischen Polymerisation der polymerisierbaren Masse als Vernetzungspunkte wirken können und eine wirksame Vernetzung des ausgehärteten Poly(meth)acrylats herbeiführen. Im Rahmen der Erfindung enthält die polymerisierbare Masse daher keine oder allenfalls eine geringe Menge (maximal 2 Gew.-%) herkömmliche Vernetzermoleküle. Der Begriff Vernetzermoleküle bezeichnet niedermolekulare (bevorzugt monomere) Moleküle mit wenigstens zwei polymerisierbaren Doppelbindungen, die zunächst lineare oder verzweigte makromolekulare Netzwerke zu dreidimensionalen polymeren Netzwerken verknüpfen können. Vernetzer sind definiert in Römpp Chemie-Lexikon, 10. Auflage, Band 6, Seite 4836.

Die Erfindung ermöglicht eine im Vergleich zur herkömmlichen Vernetzermolekülen wesentliche verbesserte Reißdehnung. Beim Einsatz von Vernetzern des Standes der Technik erhält man ein engmaschiges und damit wenig dehnbares Netzwerk. Bei der erfindungsgemäßen polymerisierbaren Masse erhält man durch die eingesetzten oberflächenmodifizierten $SiO_2$

Partikel zwar weniger Netzpunkte, aber eine Mehrzahl von langen Netzbögen "von Netzpunkt zu Netzpunkt", d.h. von Partikel zu Partikel. Ein solches Netzwerk ist dehnbarer und dennoch fest.

Bevorzugt weisen die Acrylate und/oder Methacrylate 1 bis 12, vorzugsweise 1 bis 6 C-Atome in der Alkylkette auf. Die Alkylkette kann linear oder verzweigt sein.

Die polymerisierbare Masse enthält bevorzugt 50 bis 99,5 Gew.-% Acrylate und/oder Methacrylate. Bevorzugt sind Alkylmethacrylate mit Alkyl gleich Methyl, Ethyl, Butyl, Isobutyl, oder Cyclohexyl. Besonders bevorzugt als Monomeres ist Methylmethacrylat. Dieses Monomere ist in einer bevorzugten Ausführungsform zu wenigstens 60 und besonders bevorzugt wenigstens 70 oder 80 Gew.-% in der polymerisierbaren Masse enthalten.

Bevorzugte Untergrenzen für die mittlere Teilchengröße der $SiO_2$ Partikel sind 2 nm, 3 nm, 4 nm und 5 nm. Bevorzugte Obergrenzen sind 25 nm und 20 nm. Die Unter- und Obergrenzen können beliebig zu erfindungsgemäßen Bereichen kombiniert werden. Die Teilchengröße kann in Lösung mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion maximal eine dynamische Viskosität von 3 mPas bei 25 °C aufweisen darf. Als Teilchengröße wird der Median (D50-Wert) der Partikelgrößenverteilung angeben.

Im Feststoff kann die Teilchengröße per Transmissionselektronenmikroskopie bestimmt werden. Dazu werden mindestens 100 Partikel ausgemessen und eine Partikelgrößenverteilung gebildet.

Die Oberflächenbelegung der $SiO_2$ Teilchen mit polymerisierbaren Gruppen liegt bevorzugt zwischen 0,01 - 10 Gruppen/$nm^2$, weiter vorzugsweise 0,01 - 6 Gruppen/$nm^2$, weiter vorzugsweise 0,01 - 4 Gruppen/$nm^2$ der Oberfläche der Partikel. Bevorzugt ist es, wenn pro $SiO_2$ Partikel zwischen 10 und 2500 polymerisierbare Gruppen an der Oberfläche gebunden sind. Eine weitere bevorzugte Obergrenze ist 2.000 Gruppen pro Partikel.

Über die polymerisierbaren Gruppen hinaus können die Partikel auch Gruppen tragen, die nicht in einer Polymerisation reagieren.

Die Oberfläche der Partikel kann für sphärische Partikel aus der Teilchengröße berechnet werden. Für die Berechnung wird der Median der Partikelgrößenverteilung (D50) heran gezogen. Die spezifische Oberfläche ($A_0$) lässt sich dann mit Hilfe der Dichte des Partikels (p) berechnen:

$$A_0 = 6 / (\rho \times D50)$$

Die Dichte von kolloidalem Siliziumdioxid beträgt 2,1 g/$cm^3$.

Die Zahl der reaktiven Gruppen pro Oberflächeneinheit ($n_R^A$) ergibt sich aus dem Quotienten der Zahl reaktiver Gruppen ($n_R^M$) pro Masse dividiert durch die spezifische Oberfläche:

$$n_R = (n_R^M / A_0)$$

Die Zahl reaktiver Gruppen pro Masse $n_R^M$ kann über geeignete analytische Methoden bestimmt werden. Werden Silane des Typs Alkoxy, Acyloxy, Acetoxy, Alkenoxy oder Oximosilane eingesetzt, um die reaktiven Gruppen auf die Oberfläche zu bringen, kann von einer vollständigen Hydrolyse des Silans ausgegangen werden. D.h. alle eingesetzten Gruppen finden sich auf der Oberfläche der Partikel wieder.

Die Bestimmung der Anzahl der polymerisationsfähigen Gruppen auf der Partikeloberfläche kann auch durch NMR Spektroskopie oder mittels DSC (differential scanning calorimetry) erfolgen. Diese Verfahren können insbesondere dann zur Anwendung kommen, wenn geeignete analytische Methoden zur Bestimmung reaktiver Gruppen (bspw. Iodzahlbestimmung bei Vinylgruppen) nicht zur Verfügung stehen. Bei der DSC wird die Polymerisationswärme als Maß für die Zahl der polymerisationsfähigen Gruppen auf der Partikeloberfläche gemessen. Bei dieser DSC Bestimmung wird eine definierte Menge der oberflächenmodifizierten $SiO_2$ Partikel mit einer standardisierten Peroxidlösung versetzt und die Reaktionswärme gemessen. Das Verfahren ist bspw. beschrieben in DE 36 32 215 A1.

Über die polymerisierbaren Gruppen hinaus können die Partikel auch Gruppen tragen, die nicht in einer Polymerisation reagieren.

Bei einer Variante der Erfindung sind auf der Oberfläche der $SiO_2$ Partikel wenigstens zwei verschiedene polymerisierbare Gruppen angeordnet. Diese können insbesondere Acryloyl-, Styryl-, Itaconyl- und/oder Methacryloylgruppen einerseits und Crotonyl-, Vinyl-, Allyl- und/ oder Alkenylgruppen andererseits umfassen.

Eine solche duale Oberflächenmodifizierung der $SiO_2$ Partikel hat den Vorteil, dass polymerisierbare Gruppen mit unterschiedlicher Reaktivität auf die Teilchenoberfläche aufgebracht werden können. Bei der radikalischen Polymerisation reagieren beispielsweise Acryloyl- bzw. Methacryloylgruppen früher als Vinyl- oder insbesondere Allylgruppen. Es ist daher beispielsweise möglich, zunächst bei einer niedrigeren Temperatur von beispielsweise 70°C nur die Methacryloylgruppen auf der Oberfläche der $SiO_2$ Partikel vernetzend reagieren zu lassen und zu einem späteren Zeitpunkt der Polymerisation die Temperatur zu erhöhen, beispielsweise auf 90°C, so dass auch auf der Oberfläche befindliche Allylgruppen reagieren. Alternativ ist es möglich, unterschiedliche und unterschiedlich reaktive Acrylat- bzw. Methacrylatmonomere einzusetzen, die nacheinander zudosiert werden, wobei erst das später zudosierte Monomer mit den Allylgruppen reagiert.

Die SiO$_2$-Partikel bestehen vorzugsweise zu wenigstens 70 % aus vereinzelten, nicht aggregierten oder agglomerierten Primärpartikeln. Weitere bevorzugte Untergrenzen sind 80 %, 90 %, 95 % und 98 %. Bei diesen Prozentangaben handelt es sich um Gew.-%. Gemäß diesem Aspekt der Erfindung ist es somit möglich, eine Dispersion zur Verfügung zu stellen, die im Wesentlichen frei ist von Aggregaten und/oder Agglomeraten der SiO$_2$-Partikel. Dies verbessert die Verarbeitbarkeit (geringere Viskosität) und die mechanischen Eigenschaften von damit hergestellten Zwischen- und Endprodukten. Im Stand der Technik bekannte pyrogene Kieselsäuren weisen eine durch den Herstellungsweg (Flammenpyrolyse) bedingte Aggregation/Agglomeration der Primärpartikel zu größeren Gebilden auf, die die Verarbeitbarkeit von damit hergestellten Zwischen- und Endprodukten erschwert.

Dadurch, dass die Partikel im (Meth)acrylat dispergiert vorliegen, wird eine gleichmäßige Dispersion der Partikel bei der Polymerisation ermöglicht. Liegen die Partikel nicht im (Meth)acrylat dispergiert vor, kann es bei der Polymerisation zu Agglomeration oder zu einer heterogenen Verteilung der Partikel im Polymerisat kommen.

Durch Einsatz zwei unterschiedlicher polymerisierbarer Gruppen auf der Teilchenoberfläche und dem sequentiellen Reagierenlassen mit zwei unterschiedlichen Monomeren ist es möglich, ein Polymer entstehen zu lassen, das sich gegenseitig durchdringend zwei verschiedene Polymernetzwerke enthält.

Zur Herstellung einer solchen dualen Oberflächenmodifizierung können die entsprechenden Silane bzw. Siloxane bei der Silanisierung der Siliciumdioxidpartikel in Mischung zur Reaktion gebracht werden.

Es ist bevorzugt, dass der Anteil der Acryloyl-, Styryl-, Itaconyl- und/oder Methacryloylgruppen an den polymerisierbaren Gruppen auf der Oberfläche 95 bis 5% und der Anteil der Crotonyl-, Vinyl-, Allyl- und/oder Alkenylgruppen an den polymerisierbaren Gruppen auf der Oberfläche 5 bis 95% beträgt.

Bevorzugt ist es, dass die SiO$_2$- Partikel 0,01-3 Methacryloylgruppen/nm$^2$ und zusätzlich 0,01 - 3 Vinylgruppen/nm$^2$ auf der Oberfläche aufweisen. Eine solche duale Oberflächenmodifizierung der SiO$_2$- Partikel hat den Vorteil, dass die SiO$_2$- Partikel in unterschiedlichen Stadien der Polymerisation in die Polymerketten eingebaut werden. So gewährleisten die Methacrylatgruppen auf der Partikeloberfläche, dass bereits in der Anfangsphase der Polymerisation die SiO$_2$-Partikel mit den Polymerketten verbunden werden und durch diese Anbindung eine gute Verteilung der Partikel in der Polymethacrylatmatrix gewährleisten. Demgegenüber kommt die Wirkung der Vinylgruppen besonders bei hohen Umsätzen, also bei der Endpolymerisation, zur Geltung. Durch die duale Modifizierung wird somit das Geschehen am Anfang der Polymerisation mit dem Geschehen bei der Endpolymerisation verknüpft. Auf diesem Wege resultieren homogene, dehnbare Netzwerke.

Die erfindungsgemäßen Polymere weisen nach der Aushärtung lange, von SiO$_2$- Partikel zu SiO$_2$-Partikel reichende Polymernetzbögen, d.h. lange Poly(meth)acrylatketten auf. Dies ist für ein Thermoformen bei hohen Temperaturen, z.B. 180°C, jedoch kritisch, da reine Poly(meth)acrylatketten eine niedrige Ceiling-Temperatur aufweisen (z.B. ca. 160°C für reines PMMA), dazu eine sehr hohe ZIP-Länge (>200). Bei dieser hohen Depolymerisationsneigung kann bei Polymerketten, die nur aus Methacrylat aufgebaut sind, z.B. Ketten mit MMA als Hauptbestandteil und den Methacryloxypropylgruppen der SiO$_2$- Partikeloberfläche als weiterem Bestandteil, ein Kettenbruch zur schnellen Depolymerisation der Polymethacrylatketten und damit zu einer deutlichen Reduktion des ursprünglich hohen Molekulargewichts von z.B. 1.000.000 Daltons führen.

In einer bevorzugten Ausführungsform enthält die polymerisierbare Masse daher zusätzlich als Depolymerisationsbremse wirkende Monomere mit einer ZIP-Länge von 1 oder weniger. Bevorzugt sind die Monomere ausgewählt aus der Gruppe bestehend aus C1 bis C8-Alkylacrylaten, bevorzugt aus der Gruppe bestehend aus Methyl-, Ethyl-, Butyl- und 2-Ethylhexylacrylat. Die polymerisierbare Masse kann bspw. 0,1 bis 20 Gew.-%, vorzugsweise 0,2 bis 10 Gew.-%, weiter vorzugsweise 0,5 bis 5 Gew.-% der als Depolymerisationsbremse wirkenden Monomere enthalten.

Wie die Alkylacrylate verringern auch Vinylgruppen auf der Oberfläche der SiO$_2$- Partikel als Copolymerisationsbestandteil ein schnelles Depolymerisieren der Polymerketten nach Kettenbruch. Bevorzugt sind daher Rezepturen zur Herstellung der Polymernetzwerke, die SiO$_2$- Partikel mit 0,2 - 3 Vinylgruppen / nm$^2$ auf der Oberfläche enthalten und zusätzlich 0,5 - 5 Gew.-% Alkylacrylat.

Der Begriff Glasübergangstemperatur Tg bezeichnet die Glasübergangstemperatur der erfindungsgemäßen Masse nach deren Polymerisation (Aushärtung). Die Glasübergangstemperaturen entsprechender Homopolymerisate sind bekannt und bspw. aufgelistet in J.Brandrup, E.H. Immergut, Polymer Handbook 1st Ed. J. Wiley, New York, 1975.

Die Glastemperatur eines Mischpolymerisates kann nach der sogenannten Fox-Gleichung berechnet werden (T.G. Fox, Bull. Am. Phys. Soc. (Ser. II], 1, 123 [1956]).

Bevorzugt werden die Monomerbestandteile so gewählt, dass nach deren Polymerisation eine Glastemperatur > 50 °C, bevorzugt > 100 °C resultiert. Diese Ausführungsform ist besonders geeignet zur Herstellung fester, dehnbarer Acrylate wie beispielsweise Flugzeugverglasungen.

Bevorzugt für den Aufbau weitmaschiger Netzwerke ist die Abwesenheit niedermolekularer Vernetzer, eine relativ geringe Anzahl von polymerisierbaren Gruppen auf den als Vernetzer wirkenden SiO$_2$- Partikeln und

der Einsatz sehr geringer Initiatormengen in der Anfangsphase der Polymerisation. Der Einsatz zu hoher Initiatorkonzentrationen führt zur Ausbildung von kurzen Polymerketten und damit zu kurzen Netzbögen, bzw. zu Polymerketten, die zu kurz sind, um zwei $SiO_2$- Partikel miteinander zu verknüpfen.

Von Bedeutung ist dabei nicht die insgesamt eingesetzte Initiatormenge, sondern die unter Polymerisationsbedingungen zerfallene. So zerfällt beispielsweise bei 80 °C innerhalb von 1h die Hälfte des eingesetzten Didodecanoylperoxids, bei 62 °C dagegen nur etwa 5 %.

Der Anteil der Vernetzermoleküle in der erfindungsgemäßen polymerisierbaren Masse liegt bevorzugt bei maximal 1 Gew.-%, weiter vorzugsweise maximal 0,5 Gew.-%, weiter vorzugsweise maximal 0,2 Gew.-%. Bei einer weiteren bevorzugten Ausführungsform sind keine technisch relevanten Mengen von Vernetzermolekülen in der polymerisierbaren Masse enthalten. Die Vernetzerfunktion wird ausschließlich von den oberflächenmodifizierten $SiO_2$ Partikeln wahrgenommen.

Bevorzugt kann der Gehalt an oberflächenmodifizierten $SiO_2$-Partikeln zwischen 0,5 und 5 Gew.-%, weiter vorzugsweise 1 und 2 Gew.-% liegen. Die genannte Variante der Erfindung ist beispielsweise durch Gusspolymerisation zu einem Werkstoff wie beispielsweise einer Flugzeugverglasung zu verarbeiten.

Bei solchen aus einer erfindungsgemäßen Masse hergestellten Gusspolymeren handelt es sich um Poly(meth)acrylate mit verbesserter Korrosionsbeständigkeit. Sie können gereckt, bevorzugt biaxial gereckt werden und bilden dann ein transparentes Acrylglas mit guter Zähigkeit und guten optischen Eigenschaften (Transparenz). Sie eignen sich somit insbesondere zur Herstellung oben bereits genannter Flugzeugverglasungen.

Gegenstand der Erfindung ist ferner ein polymerer Werkstoff, erhältlich durch Aushärten einer erfindungsgemäßen polymerisierbaren Masse.

Gegenstand der Erfindung ist weiter ein polymerer Werkstoff, erhältlich durch folgendes Verfahren:

a) Erwärmen eines polymeren Werkstoffs nach Anspruch 18 auf eine Temperatur T > Tg, vorzugsweise T > Tg + 10 K, weiter vorzugsweise T > Tg + 40 K, weiter vorzugsweise T > Tg + 50 K;

b) Dehnen oder Stauchen des Werkstoffs um wenigstens 5%, vorzugsweise wenigstens 10% in wenigstens einer Raumrichtung;

c) Abkühlen des Werkstoffs unter Last auf eine Temperatur T < Tg.

Ein solcher gereckter Werkstoff kann bspw. zur Herstellung einer Verglasung (Flugzeugverglasung) oder eines medizintechnischen Werkstoffes wie bspw. einer dentalen Polymerfolie verwendet werden.

Gegenstand der Erfindung ist weiter ein Verfahren zur Herstellung eines polymeren Werkstoffs nach einem der Ansprüche 13 bis 14, mit den Schritten:

a) zur Verfügung stellen einer polymerisierbaren Masse nach einem der Ansprüche 1 bis 11;

b) Hinzufügen eines Polymerisationsinitiators;

c) Durchführen einer teilweisen Polymerisation bei einer Temperatur T < Tg, bevorzugt T < Tg - 10 K, weiter bevorzugt T < Tg - 20K (Tg des herzustellenden Werkstoffs), bis wenigstens 50% der eingesetzten Monomeren polymerisiert sind;

d) Vervollständigung der Polymerisation bei einer Temperatur T > Tg - 20 K, bevorzugt T > Tg - 10 K, weiter bevorzugt T > Tg.

Bevorzugt wird unter Einsatz von Radikalbildnern wie thermisch zerfallenden Initiatoren, Redoxinitiatoren oder UV-Initiatoren derart polymerisiert, dass mehr als 50% (bevorzugt mehr als 70%) der vorhandenen Monomeren mit einer wirksamen Initiatorkonzentration von 10- 200 Mol Initiator / 1.000.000 Mol Monomer polymerisiert wird und anschließend bei T > Tg die Polymerisation vervollständigt wird.

Bevorzugt umfasst das Verfahren die folgenden weiteren Schritte:

e) Erwärmen des polymeren Werkstoffs auf eine Temperatur T > Tg, vorzugsweise T > Tg + 10 K, weiter vorzugsweise T > Tg + 40 K, weiter vorzugsweise T > Tg + 50 K;

f) Dehnen oder Stauchen des Werkstoffs um wenigstens 5%, vorzugsweise wenigstens 10% in wenigstens einer Raumrichtung;

g) Abkühlen des Werkstoffs unter Last auf eine Temperatur T < Tg.

Die derart hergestellten thermoformbaren Gegenstände werden mit Vorteil für ganz unterschiedliche Anwendungen eingesetzt. In erster Linie stellen diese Gegenstände mechanisch und optisch hochwertige Verglasungsmaterialien dar, die in weiten Grenzen thermoformbar sind, ohne zu fließen. Besonders in gereckter Form ist der Einsatz als Flugzeugverglasungsmaterial von Interesse.

Interessant erscheint auch - z.B. bei Zusatz geringer Mengen Phosporsäure oder Phosphorsäureester der Einsatz gereckter Materialien für schwer entflammbare Verglasungen.

Eine weitere Anwendung ist im Einsatz der gereckten Materialien als wärmerückstellbarer Werkstoff, z.B. als witterungsbeständige, schrumpfbare und transparente UV- Schutzfolie zu sehen.

Ganz allgemein lassen sich thermogeformte Gegenstände als Formgedächtniswerkstoffe einsetzen. Dabei ist von Interesse, dass die durch Verformung über Tg aufgezwungene Form nicht nur durch Erwärmen über Tg sondern auch durch Einwirkung von Quellungsmitteln wie z.B. Monomeren relaxiert werden kann. Dies ist für den Einsatz dieser Formgedächtniswerkstoffe als medizintechnischer Werkstoff, z.B. als Dentalfolie von Interesse.

Ausführungsbeispiele der Erfindung werden nachfolgend beschrieben.

Herstellung einer kolloidalen Dispersion von Siliciumdioxid in Methylmethacrylat (P1)

Ein kolloidales Kieselsol (40 Ges.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. Nach der Filtration vom Ionentauscher wurden 600 g des sauren Sols mit 17,7 g Gamma-Methacryloxypropyltrimethoxysilan und 10,7 g Vinyltrimethoxysilan für 60 min gerührt.

Das Sol wurde mit 2000 g Isopropanol verdünnt und unter Zugabe von 1500 g Isopropanol unter reduziertem Druck bei 45 °C ca. 3500 g Lösungsmittel-Wasser-Gemisch abdestilliert. Es wurden 637 g Sol erhalten, die mit 1600 g Methylmethacrylat (Stabilisiert mit 50 ppm Methoxyhydrochinon) verdünnt wurden. Das Isopropanol wurde unter reduziertem Druck abdestilliert, wobei zwischenzeitlich weitere 260 g Methylmethacrylat dazu gegeben wurden.

Man erhielt ein klares Sol von 42,8 Gew.-% $SiO_2$-Partikeln in MMA, wobei die Partikel 1,6 mmol Vinylgruppen / $nm^2$ (aus Vinyltrimethoxysilan) und 1,6 mmol / $nm^2$ Methacrylgruppen (aus Gamma-Methacryloxypropyltrimethoxysilan) auf der Oberfläche aufweisen.

Beispiel 1: Thermoformbare Platte mit 1,7 Gew.% $SiO_2$-Partikel

Eine Mischung aus

    0,07g Didodecanoylperoxid
    0,11g Benzoylperoxid (mit 25 Gew.% Wasser)
    1,00g Ethylacrylat
    47,00g Methylmethacrylat und
    2,00g P1

wird entgast (ca. 20 mbar) und bei Raumtemperatur in eine Polymerisationskammer gefüllt. Außenmasse der Polymerisationskammer: 150 x 200 mm. Aufbau der Kammer: Glasplatte / PET- Folie (Hostaphan RN von Mitsubishi Film GmbH) / Distanzschnur (3 mm) / Glasplatte.

Anschließend wird im Wasserbad zunächst 3 h bei 70 °C und darauf 2 h bei 85 °C polymerisiert. Zur Endpolymerisation wird 2 h bei 110 °C im Wärmeschrank getempert.

Man erhält eine farblose, transparente, harte Platte, die sich gut mechanisch bearbeiten (z.B. sägen) lässt.

Thermoformversuch

Zur Überprüfung des Thermoformverhaltens wird aus der etwa 3 mm dicken Platte ein ca. 40 x 80 mm großes Stück heraus gesägt und bei 150 °C einem Biegeversuch unterworfen. Dazu wird die Platte an den Längsenden eingespannt und in einem Wärmeschrank über einen Glasstab (Durchmesser 14 mm) gebogen. Dauer des Umformvorgangs: 20 min, anschließend wird auf Raumtemperatur abgekühlt. Man erhält eine glasklare, um 90° abgewinkelte Kunststoffplatte. Der Biegeradius an der Stelle der Biegung beträgt ca. 10 mm. Dies entspricht einer Dehnung/ Stauchung von > 10 %.

Untersuchung des Rückstellverhaltens

Der so hergestellte Kunststoffwinkel wird ohne Last 10 min auf 150 °C erwärmt. Man erhält eine glatte, ebene Platte zurück (kein erkennbarer Verformungsrest).

Beispiel 2: Thermoformbare Platte mit 0,85 Gew.-% $SiO_2$-Partikel

Man wiederholt den Polymerisationsversuch gemäß Beispiel 1, wählt jedoch eine andere Zusammensetzung: Einwaagen: 0,04 g Didodecanoylperoxid, 0,10 g Dibenzoylperoxid, 1 g Ethylacrylat, 48 g Methylmethacrylat, 1,0 g P1.

Man erhält eine farblose, transparente, harte Platte.

Thermoformversuch

Man verfährt wie in Beispiel 1, wählt jedoch als Auflage zur Biegung einen nur 6 mm dicken Glasstab, Temperatur: 150 °C, Dauer des Biegevorgangs: 20 min.

Man erhält eine glasklare, um 90° abgewinkelte Kunststoffplatte. Der Biegeradius beträgt ca. 6 mm.

Beispiel 3: Thermoformbare Platte mit 3,4 Gew.-% $SiO_2$-Partikel

Man wiederholt den Versuch gemäß Beispiel 2, wählt jedoch eine andere Zusammensetzung: Einwaagen: 1 g Ethylacrylat, 45 g Methylmethacrylat, 4 g P1.

In diesem Fall wird die Polymerisationskammer auf beiden Seiten mit PET- Folie begrenzt.

Man erhält eine farblose, transparente, harte Platte.

Thermoformversuch

Durchführung des Biegeversuchs wie in Beispiel 1.

Biegung über einen Glasstab (Durchmesser 14 mm), Temperatur im Wärmeschrank 170 °C, Dauer des Umformvorgangs: 30 min, anschließend wird auf Raumtemperatur gekühlt. Man erhält eine glasklare, um 90° abgewinkelte Kunststoffplatte. Der Biegeradius an der Stelle der Biegung beträgt ca. 10 mm.

**Patentansprüche**

1. Polymerisierbare Masse, **dadurch gekennzeichnet, dass** sie aufweist:

   a) Acrylate und/oder Methacrylate,
   b) 0,05 bis 70 Gew.-% $SiO_2$-Partikel mit einer mittleren Teilchengröße von 1 bis 30 nm, die polymerisierbare Gruppen vom Typ Methacryloyl-, Acryloyl, Styryl-, Itaconyl-, Crotonyl-, Vinyl-, Allyl- und/ oder Alkenyl- auf der Oberfläche aufweisen und in den Acrylaten und/oder Methacrylaten dispergiert vorliegen, wobei die $SiO_2$-Partikel zu wenigstens 50% aus vereinzelten, nicht aggregierten oder agglomerierten Primärpartikeln bestehen,
   c) maximal 2 Gew.-% Vernetzermoleküle.

2. Polymerisierbare Masse nach Anspruch 1, **dadurch gekennzeichnet, dass** sie 50 bis 99,5 Gew.-% Acrylate und/oder Methacrylate enthält, wobei sie vorzugsweise wenigstens 60 Gew.-%, weiter vorzugsweise wenigstens 70 Gew.-%, weiter vorzugsweise wenigstens 80 Gew.-% Methylmethacrylat enthält.

3. Polymerisierbare Masse nach Anspruch 1 oder 2, **dadurch gekennzeichnet, dass** die mittlere Teilchengröße der $SiO_2$-Partikel wenigstens 2 nm, vorzugsweise wenigstens 3 nm, weiter vorzugsweise wenigstens 4 nm, weiter vorzugsweise wenigstens 5 nm beträgt; und dass die mittlere Teilchengröße der $SiO_2$-Partikel höchstens 25 nm, vorzugsweise höchstens 20 nm beträgt.

4. Polymerisierbare Masse nach einem der Ansprüche 1 bis 3, **dadurch gekennzeichnet, dass** die $SiO_2$-Partikel polymerisierbare Gruppen in einer Konzentration von 0,01 - 10 Gruppen/$nm^2$, vorzugsweise 0,01 - 6 Gruppen/$nm^2$, weiter vorzugsweise 0,01 - 4 Gruppen/$nm^2$ der Oberfläche der Partikel aufweisen.

5. Polymerisierbare Masse nach einem der Ansprüche 1 bis 4, **dadurch gekennzeichnet, dass** die $SiO_2$-Partikel zu wenigstens 70%, weiter vorzugsweise wenigstens 80%, weiter vorzugsweise wenigstens 90% aus vereinzelten, nicht aggregierten oder agglomerierten Primärpartikeln bestehen.

6. Polymerisierbare Masse nach einem der Ansprüche 1 bis 5, **dadurch gekennzeichnet, dass** auf der Oberfläche der $SiO_2$-Partikel wenigstens zwei verschiedene polymerisierbare Gruppen angeordnet sind; wobei vorzugsweise die verschiedenen polymerisierbaren Gruppen Acryloyl-, Methacryloyl-, Itaconyl- und/oder Styrylgruppen einerseits und Crotonyl-, Vinyl-, Allyl- und/ oder Alkenylgruppen andererseits umfassen; wobei weiter vorzugsweise der Anteil der Acryloyl-, Methacryloyl-, I-taconyl- und/oder Styrylgruppen an den polymerisierbaren Gruppen auf der Oberfläche 95 bis 5% und der Anteil der Crotonyl-, Vinyl-, Allyl- und/ oder Alkenylgruppen an den polymerisierbaren Gruppen auf der Oberfläche 5 bis 95% beträgt.

7. Polymerisierbare Masse nach Anspruch 6, **dadurch gekennzeichnet, dass** die $SiO_2$- Partikel 0,01 - 3 Methacryloylgruppen und zusätzlich 0,01 - 3 Vinylgruppen/$nm^2$ auf der Oberfläche aufweisen.

8. Polymerisierbare Masse nach einem der Ansprüche 1 bis 7, **dadurch gekennzeichnet, dass** sie zusätzlich als Depolymerisationsbremse wirkende Monomere mit einer ZIP-Länge von 1 oder weniger enthält; wobei die Monomere vorzugsweise ausgewählt sind aus der Gruppe bestehend aus C1 bis C8-Alkylacrylaten, Styrol, Itatonaten, N-Alkylmaleinimiden und N-Arylmaleinimiden; weiter vorzugsweise ausgewählt sind aus der Gruppe bestehend aus Methyl-, Ethyl-, Butyl- und 2-Ethylhexylacrylat; und wobei die Masse vorzugsweise 0,1 bis 20 Gew.-%, weiter vorzugsweise 0,2 bis 10 Gew.-%, weiter vorzugsweise 0,5 bis 5 Gew.-% der als Depolymerisationsbremse wirkenden Monomere enthält.

9. Polymerisierbare Masse nach einem der Ansprüche 1 bis 8, **dadurch gekennzeichnet, dass** der Anteil der Vernetzermoleküle maximal 1 Gew.-%, vorzugsweise maximal 0,5 Gew.-%, weiter vorzugsweise maximal 0,2 Gew.-% beträgt.

10. Polymerisierbare Masse nach einem der Ansprüche 1 bis 9, **dadurch gekennzeichnet, dass** der Gehalt an $SiO_2$-Partikeln 0,05 bis 5 Gew.-%, vorzugsweise 0,05 bis 3 Gew.-%, weiter vorzugsweise 0,1 bis 2 Gew.-% beträgt.

11. Polymerer Werkstoff, erhältlich durch Aushärten einer polymerisierbaren Masse nach einem der Ansprüche 1 bis 10; wobei der polymere Werkstoff vorzugsweise ein thermoformbarer Gegenstand, ein Formgedächtniswerkstoff oder ein gerecktes Verglasungsmaterial ist.

12. Gereckter polymerer Werkstoff nach Anspruch 11, erhältlich durch folgendes Verfahren:

   a) Erwärmen eines polymeren Werkstoffs nach Anspruch 11 auf eine Temperatur T > Tg, vorzugsweise T > Tg + 10 K, weiter vorzugsweise T > Tg + 40 K, weiter vorzugsweise T > Tg + 50 K;
b) Dehnen oder Stauchen des Werkstoffs um wenigstens 5%, vorzugsweise wenigstens 10% in wenigstens einer Raumrichtung;
c) Abkühlen des Werkstoffs unter Last auf eine Temperatur T < Tg.

13. Verwendung eines polymeren Werkstoffs gemäß einem der Ansprüche 11 oder 12 zur Herstellung einer Verglasung oder eines medizintechnischen Werkstoffs.

14. Verfahren zur Herstellung eines polymeren Werkstoffs nach einem der Ansprüche 11 oder 12, mit den Schritten:

a) zur Verfügung stellen einer polymerisierbaren Masse nach einem der Ansprüche 1 bis 9;
b) Hinzufügen eines Polymerisationsinitiators;
c) Durchführen einer teilweisen Polymerisation bei einer Temperatur T < Tg, bevorzugt T < Tg - 10 K, weiter bevorzugt T < Tg - 20K (Tg des herzustellenden Werkstoffs), bis wenigstens 50% der eingesetzten Monomeren polymerisiert sind;
d) Vervollständigung der Polymerisation bei einer Temperatur T > Tg - 20 K, bevorzugt T > Tg - 10 K, weiter bevorzugt T > Tg.

15. Verfahren nach Anspruch 14, **dadurch gekennzeichnet, dass** es weiter folgende Schritte umfasst:

e) Erwärmen des polymeren Werkstoffs auf eine Temperatur T > Tg, vorzugsweise T > Tg + 10 K, weiter vorzugsweise T > Tg + 40 K, weiter vorzugsweise T > Tg + 50 K;
f) Dehnen oder Stauchen des Werkstoffs um wenigstens 5%, vorzugsweise wenigstens 10% in wenigstens einer Raumrichtung;
g) Abkühlen des Werkstoffs unter Last auf eine Temperatur T < Tg.

**Claims**

1. Polymerizable composition **characterized in that** it comprises:

a) acrylates and/or methacrylates,
b) 0.05% to 70% by weight of $SiO_2$ particles having an average particle size of 1 to 30 nm which have polymerizable groups of the methacryloyl, acryloyl, styryl, itaconyl, crotonyl, vinyl, allyl and/or alkenyl type on the surface and are present in dispersion in the acrylates and/or methacrylates, at least 50% of the $SiO_2$ particles

consisting of individual, unaggregated or unagglomerated primary particles,
c) not more than 2% by weight of crosslinker molecules.

2. Polymerizable composition according to Claim 1, **characterized in that** it contains 50% to 99.5% by weight of acrylates and/or methacrylates, preferably at least 60%, more preferably at least 70%, more preferably at least 80% by weight of methyl methacrylate.

3. Polymerizable composition according to Claim 1 or 2, **characterized in that** the average particle size of the $SiO_2$ particles is at least 2 nm, preferably at least 3 nm, more preferably at least 4 nm, more preferably at least 5 nm; and **in that** the average particle size of the $SiO_2$ particles is not more than 25 nm, preferably not more than 20 nm.

4. Polymerizable composition according to any of Claims 1 to 3, **characterized in that** the $SiO_2$ particles have polymerizable groups in a concentration of 0.01-10 groups/$nm^2$, preferably 0.01-6 groups/$nm^2$, more preferably 0.01-4 groups/$nm^2$ of the surface of the particles.

5. Polymerizable composition according to any of Claims 1 to 4, **characterized in that** at least 70%, more preferably at least 80%, more preferably at least 90% of the $SiO_2$ particles consist of individual, unaggregated or unagglomerated primary particles.

6. Polymerizable composition according to any of Claims 1 to 5, **characterized in that** at least two different polymerizable groups are disposed on the surface of the $SiO_2$ particles, the different polymerizable groups preferably comprising firstly acryloyl, methacryloyl, itaconyl and/or styryl groups and secondly crotonyl, vinyl, allyl and/or alkenyl groups; with further preference, the fraction of the acryloyl, methacryloyl, itaconyl and/or styryl groups as a proportion of the polymerizable groups on the surface is 95% to 5% and the fraction of the crotonyl, vinyl, allyl and/or alkenyl groups as a proportion of the polymerizable groups on the surface is 5% to 95%.

7. Polymerizable composition according to Claim 6, **characterized in that** the $SiO_2$ particles have 0.01-3 methacryloyl groups and additionally 0.01-3 vinyl groups/$nm^2$ on the surface.

8. Polymerizable composition according to any of Claims 1 to 7, **characterized in that** it further comprises depolymerization retardant monomers having a ZIP length of 1 or less, the monomers being selected preferably from the group consisting of C1 to C8 alkyl acrylates, styrene, itatonates, N-alkylmaleimides, and N-arylmaleimides, and being further preferably selected from the group consisting of methyl, ethyl, butyl, and 2-ethylhexyl acrylate; and wherein the composition preferably contains 0.1% to 20%, more preferably 0.2% to 10%, more preferably 0.5% to 5% by weight of the depolymerization retardant monomers.

9. Polymerizable composition according to any of Claims 1 to 8, **characterized in that** the fraction of the crosslinker molecules is not more than 1%, preferably not more than 0.5%, more preferably not more than 0.2% by weight.

10. Polymerizable composition according to any of Claims 1 to 9, **characterized in that** the amount of $SiO_2$ particles is 0.05% to 5%, preferably 0.05% to 3%, more preferably 0.1% to 2% by weight.

11. Polymeric material obtainable by curing a polymerizable composition according to any of Claims 1 to 10, the polymeric material preferably being a thermoformable article, a shape memory material or a stretched glazing material.

12. Stretched polymeric material according to Claim 11, obtainable by the following process:

    a) heating a polymeric material according to Claim 11 to a temperature T > Tg, preferably T > Tg + 10 K, more preferably T > Tg + 40 K, more preferably T > Tg + 50 K;
    b) elongating or compressing the material by at least 5%, preferably at least 10%, in at least one spatial direction;
    c) cooling the material under load to a temperature T < Tg.

13. Use of a polymeric material according to either of Claims 11 and 12 for producing glazing or a medical material.

14. Process for producing a polymeric material according to either of Claims 11 and 12, with the steps of:

    a) providing a polymerizable composition according to any of Claims 1 to 9;
    b) adding a polymerization initiator;
    c) implementing a partial polymerization at a temperature T < Tg, preferably T < Tg - 10 K, more preferably T < Tg - 20K (Tg of the material to be produced), until at least 50% of the monomers used are polymerized;
    d) completing the polymerization at a temperature T > Tg - 20 K, preferably T > Tg - 10 K, more preferably T > Tg.

15. Process according to Claim 14, **characterized in that** it further comprises the following steps:

    e) heating the polymeric material to a temperature T > Tg, preferably T > Tg + 10 K, more preferably T > Tg + 40 K, more preferably T > Tg + 50 K;
    f) elongating or compressing the material by at least 5%, preferably at least 10%, in at least one spatial direction;
    g) cooling the material under load to a temperature T < Tg.

**Revendications**

1. Masse polymérisable, **caractérisée en ce qu'**elle comprend :

    a) des acrylates et/ou des méthacrylates,
    b) 0,05 à 70 % en poids de particules de $SiO_2$ ayant une granulométrie moyenne de 1 à 30 nm, qui présentent sur leur surface des groupes polymérisables du type méthacryloyle, acryloyle, styryle, itaconyle, crotonyle, vinyle, allyle et/ou alcényle, et se présentent dispersées dans les acrylates et/ou les méthacrylates, les particules de $SiO_2$ étant à raison d'au moins 50 % constituées de particules primaires individualisées, non-agrégées ou agglomérées,
    c) au maximum 2 % en poids de molécules de réticulation.

2. Masse polymérisable selon la revendication 1, **caractérisée en ce qu'**elle contient 50 à 99,5 % en poids d'acrylates et/ou de méthacrylates, auquel cas elle contient de préférence au moins 60 % en poids, plus préférentiellement au moins 70 % en poids, plus préférentiellement au moins 80 % en poids de méthacrylate de méthyle.

3. Masse polymérisable selon la revendication 1 ou 2, **caractérisée en ce que** la granulométrie moyenne des particules de $SiO_2$ est d'au moins 2 nm, de préférence d'au moins 3 nm, plus préférentiellement d'au moins 4 nm, plus préférentiellement d'au moins 5 nm ; et que la granulométrie moyenne des particules de $SiO_2$ est au plus de 25 nm, de préférence d'au plus 20 nm.

4. Masse polymérisable selon l'une des revendications 1 à 3, **caractérisée en ce que** les particules de $SiO_2$ présentent des groupes polymérisables à une concentration de 0,01 à 10 groupes/nm$^2$, de préférence de 0,01 à 6 groupes/nm$^2$, plus préférentiellement de 0,01 à 4 groupes/nm$^2$ d'aire des particules.

5. Masse polymérisable selon l'une des revendications 1 à 4, **caractérisée en ce que** les particules de $SiO_2$

sont constituées à raison d'au moins 70 %, plus préférentiellement d'au moins 80 %, plus préférentiellement d'au moins 90 %, de particules primaires individualisées, non-agrégées ou agglomérées.

**6.** Masse polymérisable selon l'une des revendications 1 à 5, **caractérisée en ce qu'**au moins deux groupes polymérisables différents sont disposés sur la surface des particules de SiO$_2$ ; de préférence les différents groupes polymérisables comprenant d'une part des groupes acryloyle, méthacryloyle, itaconyle ou styryle, et d'autre part des groupes crotonyle, vinyle, allyle et/ou alcényle ; plus préférentiellement la proportion des groupes acryloyle, méthacryloyle, itaconyle et/ou styryle parmi les groupes polymérisables sur leur surface étant de 95 à 5 % et la proportion des groupes crotonyle, vinyle, allyle et/ou alcényle parmi les groupes polymérisables sur leur surface étant de 5 à 95 %.

**7.** Masse polymérisable selon la revendication 6, **caractérisée en ce que** les particules de SiO$_2$ comprennent 0,01 à 3 groupes méthacryloyle et en outre 0,01 à 3 groupes vinyle/nm$^2$ sur leur surface.

**8.** Masse polymérisable selon l'une des revendications 1 à 3, **caractérisée en ce qu'**elle contient en outre des monomères agissant comme frein à la dépolymérisation, présentant une longueur ZIP (de fermeture-éclair) de 1 ou moins ; les monomères étant de préférence choisis dans le groupe consistant en les acrylates d'alkyle en C1 à C8, le styrène, les itaconates, les N-alkylmaléimides et les N-arylmaléimides ; étant plus préférentiellement choisis dans le groupe consistant en les groupes méthyle, éthyle, butyle et 2-éthylhexyle ; et la masse contenant de préférence 0,1 à 20 % en poids, plus préférentiellement 0,2 à 10 % en poids, plus préférentiellement 0,5 à 5 % en poids des monomères à effet de frein à la dépolymérisation.

**9.** Masse polymérisable selon l'une des revendications 1 à 8, **caractérisée en ce que** la proportion des molécules de réticulation est au maximum de 1 % en poids, de préférence au maximum de 0,5 % en poids, plus préférentiellement au maximum de 0,2 %.

**10.** Masse polymérisable selon l'une des revendications 1 à 9, **caractérisée en ce que** la teneur en particules de SiO$_2$ est de 0,05 à 5 % en poids, de préférence de 0,05 à 3 % en poids, plus préférentiellement de 0,1 à 2 % en poids.

**11.** Matériau polymère, pouvant être obtenu par durcissement d'une masse polymérisable selon l'une des revendications 1 à 10 ; le matériau polymère étant de préférence un objet thermoformable, un matériau à mémoire de forme ou un matériau de vitrage orienté.

**12.** Matériau polymère orienté selon la revendication 11, pouvant être obtenu par le procédé suivait :

a) chauffage d'un matériau polymère selon la revendication 11 à une température T > Tg, de préférence T > Tg + 10 K, plus préférentiellement T > Tg + 40 K, plus préférentiellement T > Tg + 50 K ;
b) dilatation ou compression du matériau d'au moins 5 %, de préférence d'au moins 10 % dans au moins une direction spatiale ;
d) refroidissement du matériau sous charge à une température T < Tg.

**13.** Utilisation d'un matériau polymère selon l'une des revendications 11 ou 12, pour fabriquer un vitrage ou un matériau de technique médicale.

**14.** Procédé de fabrication d'un matériau polymère selon l'une des revendications 11 ou 12, comprenant les étapes :

a) fourniture d'un masse polymérisable selon l'une des revendications 1 à 9 ;
b) addition d'un amorceur de polymérisation ;
c) mise en oeuvre d'une polymérisation partielle à une température T < Tg, de préférence T < Tg - 10 K, plus préférentiellement T < Tg - 20 K (Tg du matériau à fabriquer), jusqu'à polymérisation d'au moins 50 % des monomères utilisés ;
d) parachèvement de la polymérisation à une température T > Tg - 20 K, de préférence T > Tg - 10 K, plus préférentiellement T > Tg.

**15.** Procédé selon la revendication 14, **caractérisé en ce qu'**il comprend en outre les étapes suivantes :

e) chauffage du matériau polymère à une température T > Tg, de préférence T > Tg + 10 K, plus préférentiellement T > Tg + 40 K, plus préférentiellement T > Tg + 50 K ;
f) dilatation ou compression du matériau d'au moins 5 %, de préférence d'au moins 10 %, dans au moins une direction spatiale ;
g) refroidissement du matériau sous charge à une température T < Tg.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4443355
- DE 69826226
- DE 19617931
- DE 19933098
- EP 0505230 A
- EP 0926170 B1
- US 2801185 A
- DE 3632215 A1

**In der Beschreibung aufgeführte Nicht-Patentliteratur**

- *Polym Int,* 2004, vol. 53, 378
- *J. Colloid Interface Sei,* 1968, vol. 26, 62
- Römpp Chemie-Lexikon. vol. 6, 4836
- **J.BRANDRUP, E.H.** Immergut, Polymer Handbook. J. Wiley, 1975
- **T.G. FOX.** *Bull. Am. Phys. Soc.,* 1956, vol. 1, 123